# EUROPEAN PATENT SPECIFICATION

(11) **EP 3 328 216 B1**
(45) Date of publication and mention of the grant of the patent: **17.04.2024**
(21) Application number: 15724396.5
(22) Date of filing: 27.07.2015
(51) Int. Cl.: A23G 3/20, A23G 3/26, A23P 20/13

(54) **IMPROVED TUMBLE DRUM FOR FLAVORING FOOD PORTIONS**
VERBESSERTE SCHLEUDERTROMMEL ZUM AROMATISIEREN VON NAHRUNGSMITTELPORTIONEN
TAMBOUR À TOURBILLON POUR ASSAISONNER DES PORTIONS ALIMENTAIRES

(43) Date of publication of application: 06.06.2018
(73) Proprietor: Svejkovsky, Karen Sue, Rockwall, TX 75032 (US)
(72) Inventor: PETRI, Kenneth, C., Richardson, TX 75081 (US); SVEJKOVSKY, P., Blake, Coppell, TX 75019 (US); SVEJKOVSKY, Paul, A., deceased (US)
(74) Representative: HGF
(86) International application number: PCT/US2015/016918
(87) International publication number: WO 2017/018971

(56) References cited:
- EP-A2- 0 203 842
- US-A- 1 840 289
- US-A- 6 153 235

## Description

### Statement of Related Application

This application depends from and claims priority to US Patent Application No. 14/186,956 filed on February 21, 2014.

### BACKGROUND

### Field of the Invention

The present invention relates to an apparatus for turning, unsettling and disturbing a large plurality of individual portions of food to promote the uniform and consistent application of a granular or powderized seasoning, an oil spray and/or other flavoring material that is dispensed in a food processing system. More specifically, the present invention relates to an improved tumble drum for use in the application of seasoning, oil and/or other flavoring material to individual portions of food.

### Background of the Related Art

Tumble drums are used to apply a seasoning and/or an oil spray to foodstuffs consisting of a large plurality of individual food portions such as, for example, potato chips, popcorn or nuts. These and other foodstuffs of this type are suitable for the application of seasoning and/or oil spray by continuously turning, unsettling and disturbing the individual food portions placed within the drum by rotating the drum in a generally horizontal position or in a slightly downwardly canted position.

Tumble drums are generally moved by a machine and in a manner that causes the individual food portions to progressively move through the tumble drum. from the inlet to the outlet. For example, a tumble drum may be canted slightly downwardly and off horizontal to cause food portions continuously deposited into the tumble drum at the inlet to progressively move through the tumble drum at a generally controlled rate until the individual food portions reach and then spill out of the outlet. During the time that an individual food portion remains within the tumble drum, which his referred to herein as the residence time, the tumble drum rotates to continuously disturb, turn and unsettle the individual food portions. This action ensures that all sides of each individual food portion receive seasoning and/or oil spray. It will be understood that the residence time is a function of, among other factors, the downwardly cant, i.e. the angle below horizontal, of the axis about which the tumble drum rotates. A larger downwardly cant will reduce the residence time and a smaller downwardly cant will increase residence time.

A tumble drum may be rotated about a horizontal axis of rotation instead of an axis of rotation having a downwardly cant. When a tumble drum is rotated about a horizontal axis, a means other than gravity must be provided to move the individual food portions through the tumble drum. In one embodiment, the tumble drum may be coupled to a differential impulse driver that reciprocates the tumble drum along the horizontal axis of rotation while the tumble drum is rotated. The reciprocation is characterized in that the rate of acceleration of the tumble drum is less in the direction of desired movement of the individual food portions than in the opposite direction. The greater rate of acceleration in the direction opposite to the desired direction of movement of the individual food portions causes the food portions to slide along the interior wall of the tumble drum more than the food portions will slide at the lower rate of acceleration in the desired direction of movement of the food portions. The result is that the individual food portions move within the tumble drum in the direction of the smaller rate of acceleration and opposite to the direction of the greater rate of acceleration. More details relating to differential impulse conveyance are included in U.S. Patents 6,527,104 and 6,189,683 to Svejkovsky el al.

A downwardly cant of the axis of rotation of the tumble drum, or the stroke and/or rates of acceleration imparted by a differential impulse driver, may be optimized to achieve a desired residence time of the food portions within the tumble drum. The residence time of the food portion within the tumble drum and the rate at which seasoning and/or oil spray is deposited into the tumble drum will greatly influence the amount of seasoning and/or oil spray applied to each individual food portion during its time within the tumble drum. Flights may be provided on the interior wall of the tumble drum to prevent food portions from sliding circumferentially along the interior wall of the tumble drum as it rotates. The result is that the flights turn, disturb and unsettle the food portions along the interior wall as the drum rotates, but the flights are generally disposed axially along the interior wall of the tumble drum so as not to impair the movement of food portions from the inlet to the outlet.

A problem with conventional tumble drums is revealed when the rate of throughput of the food portions varies. The residence time of a given food portion, from the time it enters the inlet of the drum to the time that it exits the outlet of the drum, will be less at a low rate of throughput than at a higher rate of throughput. This is because the higher rate of throughput causes a greater amount of stacked food portions within each axial segment along the bottom "trough" of the tumble drum, and that greater load pushes against the food portions within the trough and ahead of the stacked food portions. The result is that the "stacking" of food portions within the tumble drum creates pressure that adds to the other forces that move food portions through the tumble drum and the food portions respond by moving through the tumble drum at a faster rate than would occur if the food portions moved at a rate determined solely by the downwardly cant of the tumble drum, or by the differential impulse driver, and not by the added application of force applied by the stacking of food portions within the trough of the tumble drum.

The rate at which seasoning and/or oil spray is applied to food portions moving through a tumble drum can be varied and is generally tailored to provide a uniform and consistent amount of seasoning and/or oil on each individual portion. This requires that the seasoning and/or oil dispensing apparatus operate at a rate that is based on the residence time of the individual food portions within the tumble drum where seasonings and/or oil are applied. Any unwanted variation in residence time resulting from variations in throughput causes food portions to be seasoned and/or oiled inconsistently, with food portions with a longer residence time in the drum (due to lower throughput) receiving more seasoning and/or oil than food portions with a shorter residence time (due to higher throughput). It is advantageous to minimize the variation in residence time of food portions that move through a tumble drum.

**Reference** is made to EP 0203842 A2, which discloses that a flavor-coated cereal capable of releasing its flavor coating into milk in which it is immersed is produced by wetting a surface of the cereal product with a sugar solution, sprinkling a particulate flavoring composition (for example, ground hard candy) onto the cereal product while it is still wet with the sugar solution, and then drying the cereal product.

Reference is also made to US 1840289 A, which discloses a coating apparatus comprising a horizontally-rotating drum comprising two co-axial counterconed shells, one within the other and separated by a circumferential interspace. The inner shell is wholly reticulate (e.g. wire mesh) and is provided with long-pitched spiral vanes to ensure positive forward gravitational progression of articles to be coated introduced at the small or intake end toward the larger or discharge end. The outer shell is imperforate and merges into the inner shell at the delivery end of the apparatus. The outer shell induces rearward gravitation of excess coating material released from the articles incidental to progression through the apparatus into the interspace, for re-use at the intake end of the drum.

### BRIEF SUMMARY

One embodiment of the apparatus of the present invention use in applying a flavouring material on a plurality of individual food portions, comprises a rotatable drum having an inlet at an upstream end, an outlet at a downstream end that is opposite to the upstream end, an interior wait defining an interior of the drum intermediate the inlet and the outlet, a frustoconical portion of the interior of the drum including a large diameter portion that is proximal to the inlet of the drum that tapers down to a smaller diameter portion that is proximal to the outlet of the drum, a radially outward drop-off intermediate the larger diameter portion of the frustoconical portion of the interior of the drum and the inlet, a plurality of angularly-spaced and axially-extending flights along the interior wall and within the frustoconical portion of the interior to agitate and disturb food portions received into the frustoconical portion of the drum, a drum support coupled to support the rotatable drum, in one of a horizontal position, wherein the frustoconical interior portion is rotatable about a horizontal axis therethrough, and a downwardly canted position, wherein the axis of rotation of the frustoconical interior portion is downwardly canted to dispose the inlet at an elevated position relative to the outlet, a motor operatively coupled intermediate the drum support and the drum to rotate the rotatable drum about the axis of the frustoconical interior portion, and a flavoring material dispenser supported within the interior of the drum to dispense a flavoring material generally downwardly and onto food portions within the interior of the drum.

### BRIEF DESCRIPTION OF THE SEVERAL VIEWS OF THE DRAWINGS

FIG. **1** is an elevation view of one embodiment of an improved tumble drum for minimizing variance in residence time of food portions moving through the tumble drum for application of seasoning or oil spray.
FIG. **2** is a sectional of the tumble drum of FIG. **1****.**
FIG. **3** is the sectional view of the tumble drum of FIG, **2** as food portions are moved through the tumble drum for application of seasoning or oil spray.
FIG. **4** is a perspective view of the improved tumble drum of FIGs. **1-3****.**
FIG. **5** is an elevation view of an alternate embodiment of an improved tumble drum for minimizing variance in residence time of food portions moving through the tumble drum for application of seasoning or oil spray.
FIG. **6** is a sectional of the tumble drum of FIG. **5****.**
FIG. **7** is the sectional view of the tumble drum of FIG. **5** as food portions are moved through the tumble drum for application of seasoning or oil spray.
FIG. **8** is a perspective view of the improved tumble drum of FIGs. **5-7****.**

### DETAILED DESCRIPTION

One embodiment of the present invention provides a tumble drum having an introduction section at the inlet, and then a generally convergent interior along substantially the length of the tumble drum. This embodiment may be useful in maintaining a generally constant and uniform residence time where the drum is rotated and canted downwardly, from the inlet to the outlet, to move food portions through the drum.

Another embodiment of the present invention provides a tumble drum having an introduction section, an intermediate section that is generally cylindrical (i.e., nonconvergent), and a final convergent section that is adjacent to the outlet of the tumble drum. This embodiment has an interior circumferential ledge, or "drop-off", intermediate the generally cylindrical section and the final, convergent section. The circumferential ledge causes food portions to drop from the middle section of the tumble drum into the convergent section. This isolates the food portions in the initial portion of the final, convergent stage from pressure or force applied by the trailing accumulation of food portions in the middle section to maintain optimal residence time. Similarly, the convergence of the interior wall of the drum in the final section retards the rate of axial movement of food portions along the tumble drum to maintain optimal residence time. This embodiment may be useful in maintaining residence time where the drum is rotated and reciprocated along its axis using a differential impulse driver to move food portions through the drum.

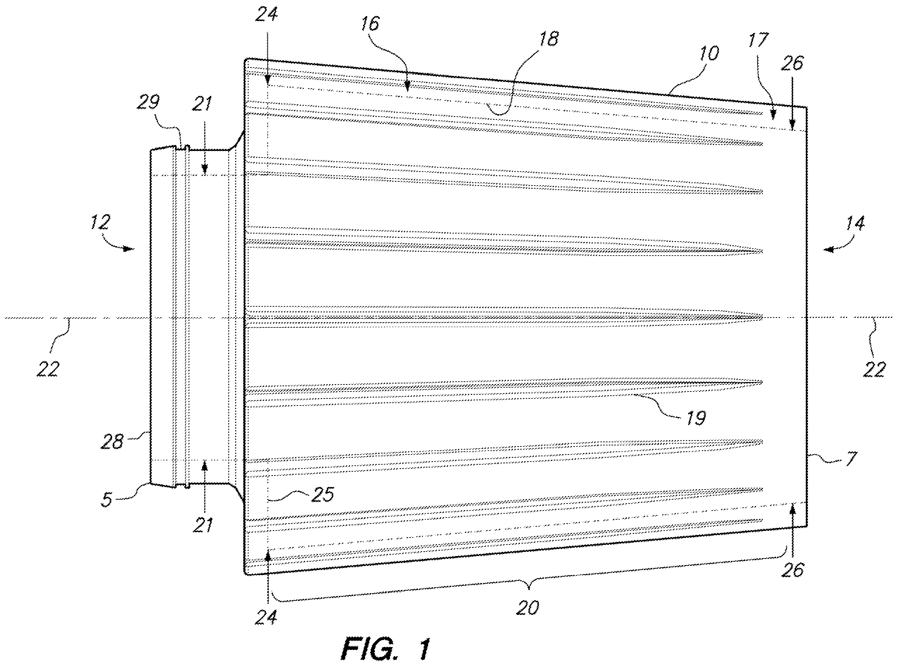

FIG. **1** is an elevation view of one embodiment of an improved tumble drum **10** for minimizing variance in residence time of food portions (not shown) moving through the tumble drum for application of a seasoning or an oil spray. The tumble drum **10** of FIG. **1** comprises an inlet **12** at an upstream end **5,** an outlet **14** at a downstream end **7** opposite the upstream end **5,** an interior **wall 18,** indicated by a dotted line in FIG. **1****,** and a portion **20** with a generally frustoconical interior. The inlet **12** to the tumble drum **10** has a diameter indicated by arrows **21.** The portion **20** with the generally frustoconical interior is intermediate the outlet **14** and the inlet **12.** The portion **20** with the generally frustoconical interior includes a large diameter end **16** indicated by the distance between arrows **24** proximal the inlet **12** and a small diameter end **17** indicated by the distance between arrows **26** proximal the outlet **14.** A radially outward drop-off **25** is disposed intermediate the inlet **12** and the portion **20** with the frustoconical interior. The tumble drum **10** may further comprise a plurality of flutes **19** to provide rigidity to the tumble drum **10** to prevent unwanted deformation. The tumble drum **10** is rotatable about an axis **22** that generally coincides with an axis of the frustoconical interior portion **20.** The tumble drum **10** may further include a protruding portion **28** about the inlet **12** having a circumferential groove **29.** It will be understood that the protruding portion **28** with the groove **29** can be adapted for coupling to a motorized driver (not shown) to rotate the tumble drum **10** about the axis **22** or, alternately, for coupling to a motorized driver having a differential impulse driver to simultaneously rotate the tumble drum **10** and to reciprocate the tumble drum **10** along the axis **22.**

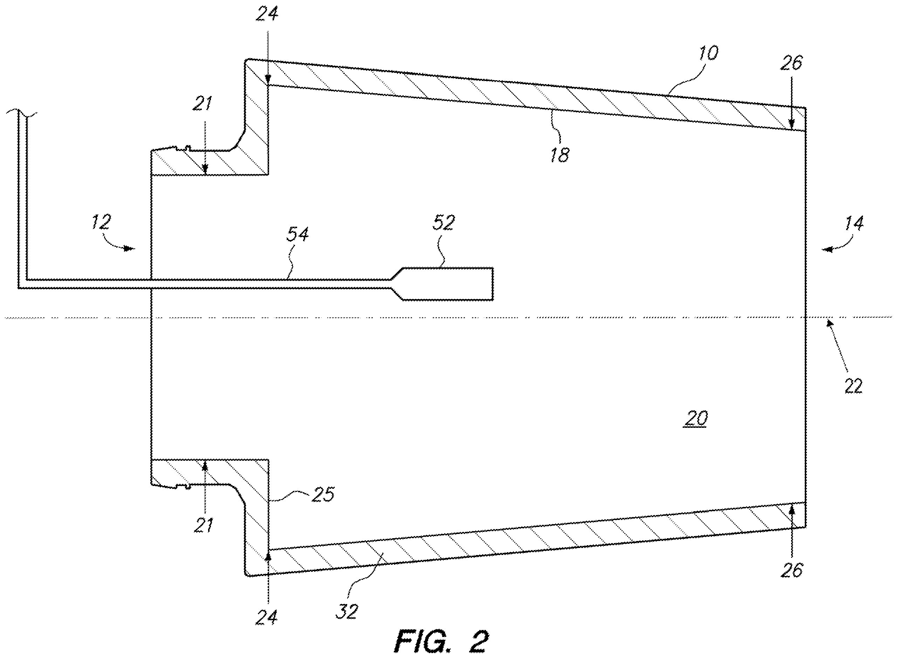

FIG. **2** is a sectional of the tumble drum of FIG. 1 that illustrates the profile of the frustoconical interior section **20** disposed intermediate the outlet **14** and the inlet **12** of the drum **10.** FIG. **2** illustrates the substantial increase in diameter of the drum **10** interior from the inlet diameter indicated by arrows **21** to the large diameter end **16** of the frustoconical interior portion **20** indicated by the arrows **24,** thereby forming the radial drop-off **25** over which product will spill to settle onto the interior wall **18.** The frustoconical interior portion **20** illustrated in FIG. **2** performs as an accumulator by storing more volume and/or mass of the food portions for each linear unit of length of the tumble drum **10** in the axial direction, i.e. as measured along the axis **22** (see FIG. **1**). The tumble drum **10** of the present invention will, at any given time and for the same rate of throughput, contain more food portions than would a conventional tumble drum. However, the food portions that are received within the tumble drum **10** of the present invention will exhibit less variation in residence time within the tumble drum **10** because the residence time of the food portions is dependent on new and controllable factors including, but not limited to, the angle of convergence of the frustoconical interior portion **20** and the length of the frustoconical interior portion **20.**

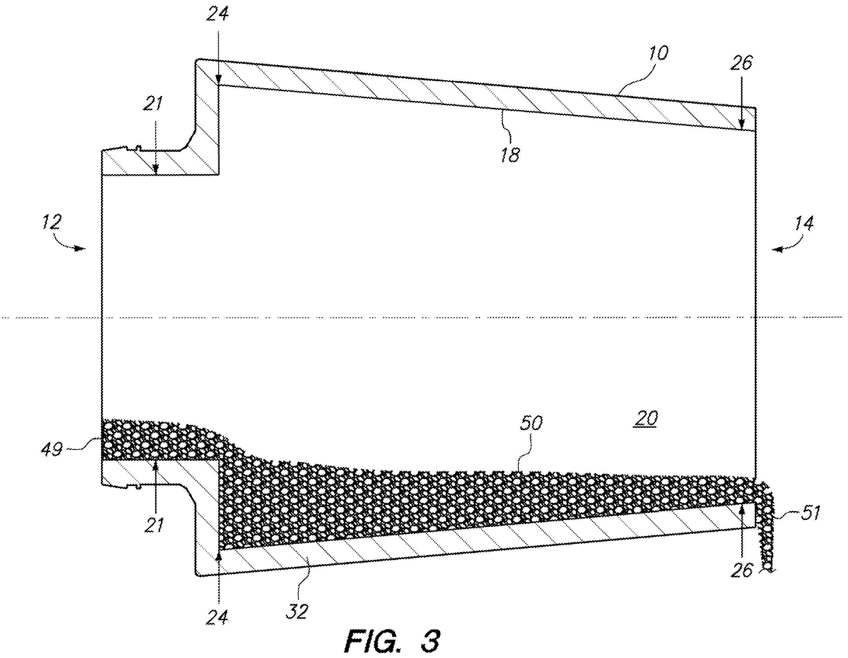

FIG. **2** illustrates the positioning of a dispenser **52** for dispensing a seasoning, such as salt, and/or an oil spray or other flavoring material onto the food portions **50** (not shown on FIG. **2** - see FIG. **3**). The dispenser **52** is supported within the interior of the tumble drum **10** by a tubular support arm **54** through which the flavoring material is supplied to the dispenser **52.** Flavoring material (not shown) is controllably dispensed according to the rate at which food portions (not shown) moving through the tumble drum **10.** The tumbling of the food portions provided by rotation of the tumble drum **10** about the axis **22** contributes to distribution and uniformity of application of the flavoring material.

FIG. **3** is the sectional view of the tumble drum **10** of FIG. **2** as food portions **50** are moved through the tumble drum **10** for application of flavoring material dispensed from the dispenser **52** (not shown in FIG. **3** - see FIG. **2**). The food portions **50** tend to gather and stack one upon the others in the tumble drum **10** and on the lowest portion of the interior wall **18** due to gravity. As the tumble drum **10** rotates about the axis **22,** the food portions **50** are turned and unsettled, but generally remain in a stacked configuration along the bottom of the tumble drum **10** due to gravity, except where unsettled by the flights (not shown). As unseasoned and unflavored food portions **49** enter through the inlet **12** of the tumble drum **10**, seasoned and flavored food portions **51** are discharged from the outlet **14** of the tumble drum **10.** FIG. **3** illustrates the manner in which the tumble drum **10** having a frustoconical interior portion **20** accumulates a volume of food portions **50** for more predictable movement though the tumble drum **10** and for more consistent and less variable residence time of the food portions **50** within the tumble drum **10.** This benefit enables the operator of the process to prevent over-flavoring and under-flavoring of food portions **50** due to fluctuations in residence time of food portions **50** processed using conventional tumble drums.

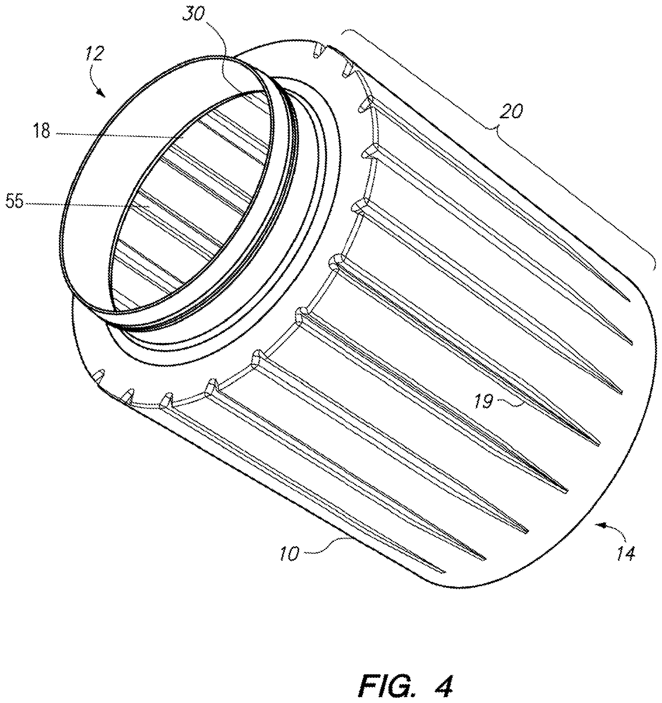

FIG. **4** is a perspective view of the improved tumble drum of FIGs. **1-3****.** FIG. **4** shows one of the flights **55** extending radially inwardly from the interior **wall 18** of the frustoconical interior portion **20** of the tumble drum **10.** The flights **55** are generally equally angularly spaced about the axis **22** of the tumble drum **10** and extend inwardly from the interior wall **18** towards the axis **22** (not shown in FIG. **4**). The flights **55** enhance the unsettling of the food portions **50** by obstructing the food portions **50** from sliding engagement along the interior wall **18** of the tumble drum **10** and thereby carrying some of the food portions **50** through at least some angular displacement from the bottommost portion of the frustoconical interior portion **20** until the change in the angle of the flight **55** (due to rotation of the tumble drum **10**) and the gravitational force on the carried food portions combine to cause the food portions to spill off of the flight **55** and back towards the bottom of the frustoconical interior portion **20.**

It should be noted that, while embodiments of the improved tumble drum of the present invention can be used in a variety of processes, different embodiments may be suited for particular applications. For example, but not by way of limitation, the "full cone" or "extended cone" embodiment of FIGs. **1-4****,** which includes a frustoconical interior portion **20** that extends substantially from the inlet **12** to the outlet **14,** is best suited for use in a process where the food portions **50** move through the tumble drum **10** due to the use of a differential impulse driver, which is discussed above. This embodiment of the tumble drum of the present invention provides a consistent rate of product flow produced by the differential impulse driver which moves food portions **50** along a circular or a frustoconically-shaped interior passage of the tumble drum by moving the circular or frustoconlcally-shaped interior passage in the desired direction of food portion travel at a first, low rate of acceleration to prevent or minimize the slippage or sliding of food portions **50** within the circular or frustoconically-shaped passage of the tumble drum, and then to restore the circular or frustoconically-shaped passage back to its original position using a second, greater rate of acceleration to promote or maximize the sliding of food portions **50** within the circular or frustoconically-shaped passage of the tumble drum. This cycle of movement provided by a differential impulse driver used in combination with the embodiment of the tumble drum **10** illustrated in FIGs. **1-4** serves to reduce variations in the standard deviation of residence time within the tumble drum for food portions that pass through the tumble drum, thereby providing a more consistent application of seasoning, oil spray and/or other flavoring material to each food portion that moves through the tumble drum.

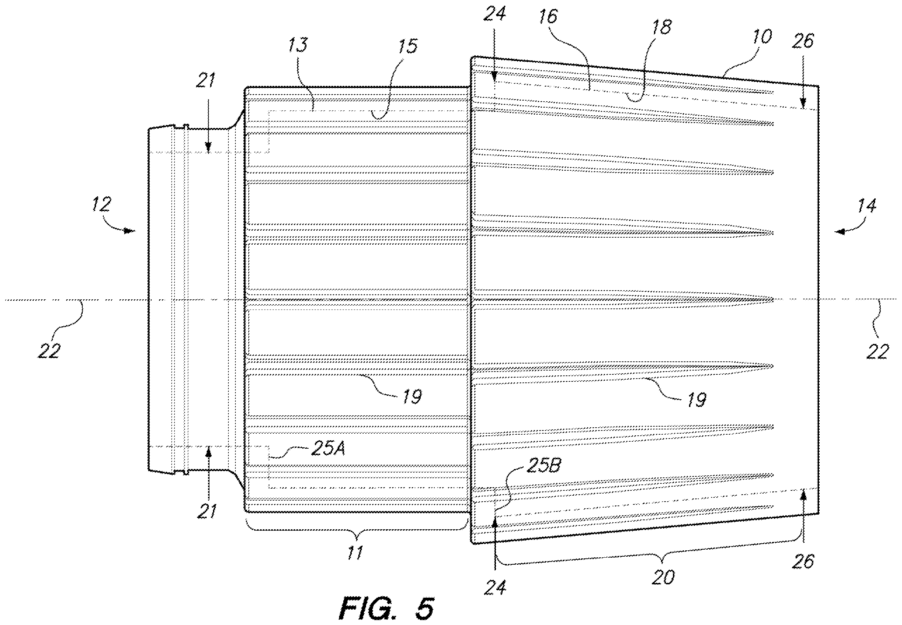

An alternate embodiment of the tumble drum of the present invention includes a partially-stepped cone portion design for on-machine flavoring applications where the change in throughput and stop/start cycles occur on a frequent basis. The extended-cone embodiment of FIGs. **1-4** has the longer residence time, but the partially-stepped cone portion design provides better performance and more consistent residence time with the more frequent stops and re-starts required for tumble drums that, instead of using a differential impulse driver, rotate about a downwardly canted axis to promote movement of food portions through the rotating tumble drum. This partially-stepped cone portion design is shown in FIGs. **5-8**.

FIG. **5** is an elevation view of the alternate embodiment of an improved tumble drum **10** having a partially-stepped cone portion for minimizing variance in residence time of food portions **50** moving through the tumble drum **10** for generally even application of a seasoning, an oil spray and/or other flavoring material. The alternate embodiment of the tumble drum **10** of FIG. **5** comprises an inlet **12,** an outlet **14**, a frustconical interior portion **20,** and a generally cylindrical interior portion **11** disposed intermediate the frustoconical interior portion **20** and the inlet **12.** The cylindrical interior portion **11** and the adjacent frustoconical interior portion **20** are together disposed about a central axis **22** that may be downwardly canted from horizontal for movement of food portions through the drum **10**. The diameter of the inlet **12** is indicated by the spacing between the arrows **21** and the cylindrical interior portion **11** is at least the same diameter or larger in diameter as the inlet **12.** The diameter of the cylindrical interior portion **11** of the embodiment of the tumble drum **10** illustrated in FIG. **5** is slightly larger in diameter as the inlet **12,** thereby providing a drop-off **25A** intermediate the inlet **12** and the cylindrical interior portion **11.** The diameter of the end of the frustoconical interior portion **20** disposed adjacent to the cylindrical interior portion **11** is indicated by the arrows **24** and is larger in diameter than the cylindrical interior portion **11,** thereby providing a drop-off **25B.** The diameter of the end of the frustoconical interior portion **20** adjacent to the outlet **14** is smaller in diameter than the diameter of the end of the frustoconical interior portion **20** disposed adjacent to the cylindrical interior portion **11.** The tumble drum **10** of FIG. **5** further comprises a plurality of exterior flutes **19** for stiffness and strength.

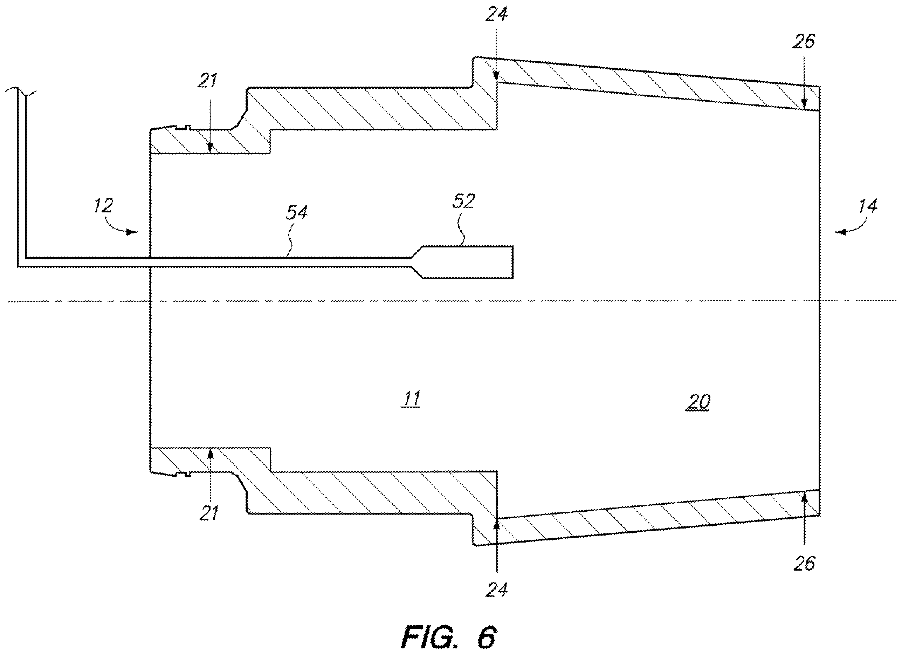

FIG. **6** is a sectional view of the tumble drum of FIG. **5** that illustrates the profile of the frustoconical interior section **20** disposed intermediate the outlet **14** and die cylindrical interior portion **11** of the tumble drum **10.** FIG. **6** illustrates the substantial increase in diameter of the tumble drum **10** interior from the inlet diameter indicated by arrows **21** to the large diameter end of the frustoconical interior portion **20** indicated by arrows **24.** The frustoconical interior portion **20** performs as an accumulator by storing more volume and/or mass of the food portions for each linear unit of length of the tumble drum **10** in the axial direction, i.e. as measured along the axis **22.** The tumble drum **10** of the present invention will, at any given time and for the same rate of throughput, contain more food portions per inch or centimeter than would a conventional tumble drum. However, the food portions that are received within the tumble drum **10** of the present invention will exhibit less variation in residence time within the tumble drum **10** because the residence time of the food portions is dependent on new and controllable factors including, but not limited to, the angle of convergence of the frustoconical interior portion **20** and the length of the frustoconical interior portion **10**.

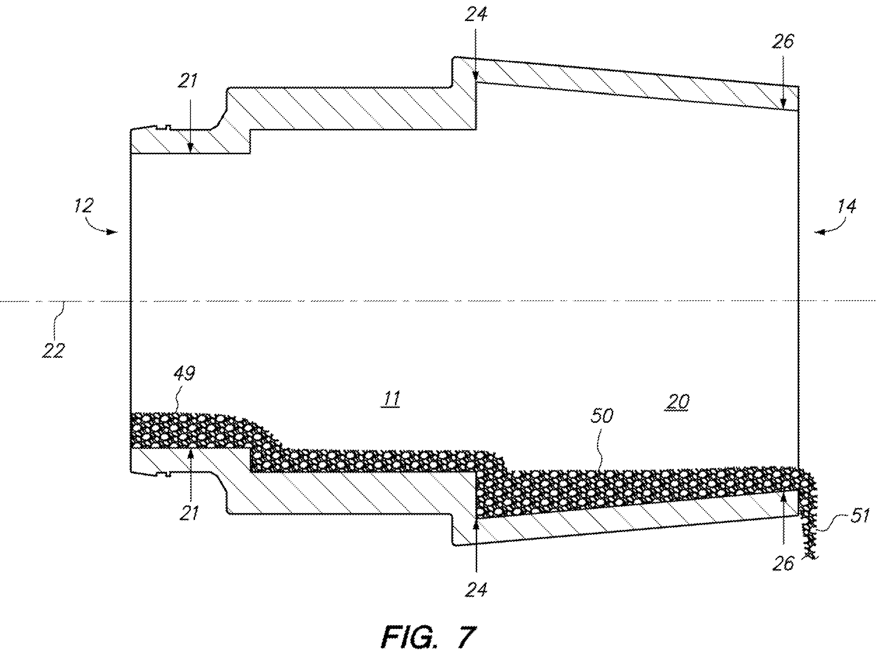

FIG. **6** illustrates the positioning of a dispenser **52** for dispensing seasoning, salt, an oil spray or other flavoring material onto the food portions **50** (not shown on FIG. **6** - see FIG. **7**). The dispenser **52** is supported within the interior of the tumble drum **10** by a tubular support arm **52** through which the flavoring material is supplied to the dispenser **52.** Flavoring material (not shown) is controllably dispensed according to the rate at which food portions (not shown) moving through the tumble drum **10.** The tumbling of the food portions provided by rotation of the tumble drum **10** about the axis **22** contributes to distribution and uniformity of application of the flavoring material.

FIG. **7** is the sectional view of the tumble drum **10** of FIG. **5** as food portions **50** are moved through the tumble drum **10** for application of seasoning, oil spray and/or other flavoring material. The food portions **50** tend to gather and stack one upon the others in the bottom of the tumble drum **10** frustoconical interior portion **20** due to gravity. As the tumble drum **10** rotates about the downwardly canted axis **22,** the food portions **50** are turned and unsettled, but generally remain in a stacked configuration along the bottom of the tumble drum **10** due to gravity. As unseasoned and unflavored food portions **49** enter through the inlet **12** of the tumble drum **10,** seasoned and flavored food portions **51** are discharged from the end of the tumble drum **10.** FIG. **7** illustrates the manner in which the tumble drum **10** having a frustoconical interior portion **20** accumulates a volume of food portions **50** for more predictable movement though the tumble drum **10** and for more consistent residence time within the tumble drum **10.** This benefit enables the operator of the process to prevent over-flavoring and under-flavoring of food portions **50** due to fluctuations in residence time of food portions **50** processed using conventional tumble drums.

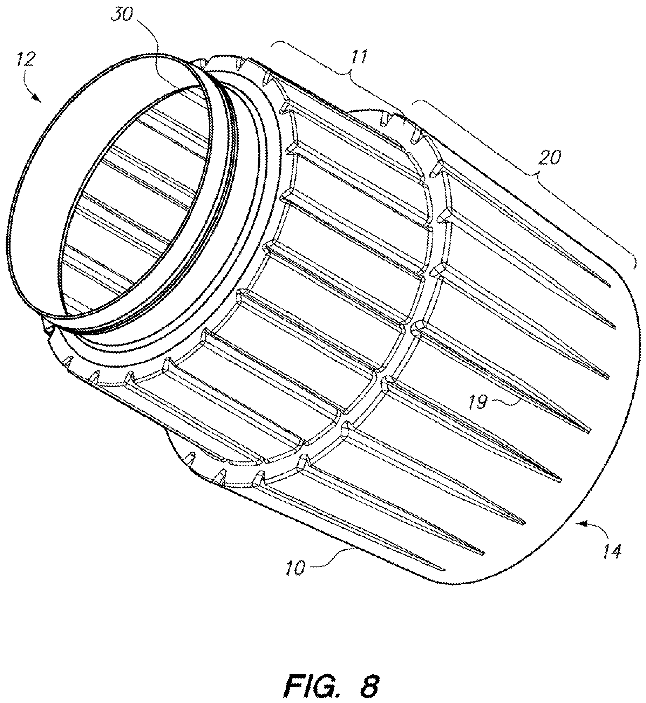

FIG. **8** is a perspective view of the improved tumble drum **10** of FIGs, **5-7****.** Radially inwardly-extending flights **30** are angularly spaced about the interior of the generally cylindrical interior portion **11** and extend through the frustoconical interior portion **20.**

It will be understood that the relative length of the generally cylindrical interior portion **11** and the frustoconical interior portion **20** may vary according to the diameters indicated by the arrows **21, 24** and **26** shown in FIGs. **5** and **6****.** Other factors, including, but not limited to, the size and stacking characteristics of the food portions **50,** the downwardly canted angle (when present) and the angle of convergence of the frustoconical interior section **20** influence the residence time of the food portions **50** within the tumble drum **10.**

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, components and/or groups, but do not preclude the presence or addition of one or more other features, integers, steps, operations, elements, components, and/or groups thereof. The terms "preferably," "preferred," "prefer " "optionally," "may," and similar terms are used to indicate that an item, condition or step being referred to is an optional (not required) feature of the invention.

The description of the present invention has been presented for purposes of illustration and description, but it is not intended to be exhaustive or limited to the invention in the form disclosed. Many modifications and variations will be apparent to those of ordinary skill in the art without departing from the scope of the invention as defined in the appended claims.

## Claims

1. An apparatus for the application of a flavoring material on a plurality of individual food portions, comprising:
a rotatable drum (10) having:
an inlet (12) at an upstream end (5);
an outlet (14) at a downstream end (7) that is opposite to the upstream end;
an interior wall (18) defining an interior of the drum (10) intermediate the inlet (12) and the outlet (14);
a frustoconical portion (20) of the interior of the drum (10) including a larger diameter portion (16) that is proximal to the inlet (12) and a smaller diameter portion (17) that is proximal to the outlet (14);
a radially outward drop-off (25) intermediate the larger diameter portion (16) of the frustoconical portion (20) of the interior of the drum and the inlet (12);
a plurality of angularly-spaced and axially-extending flights (55) on the interior wall (18) and within the frustoconical portion (20) of the interior to agitate and disturb food portions received into the frustoconical portion (20) of the drum (10);
a drum support coupled to support the rotatable drum (10) in one of a horizontal position, wherein the frustoconical interior portion (20) is rotatable about a horizontal axis (22) therethrough, and a downwardly canted position, wherein the axis of rotation of the frustoconical interior portion (20) is downwardly canted to dispose the inlet (12) at an elevated position relative to the outlet (14);
a motor operatively coupled intermediate the drum support and the drum (10) to rotate the rotatable drum (10) about the axis of the frustoconical interior portion (20); and
a flavoring dispenser (52) supported within the interior of the drum (10) to dispense a flavoring material generally downwardly and onto food portions deposited through the inlet (12) and within the interior of the drum (10).

2. The apparatus of claim 1, wherein the flavoring material dispensed generally downwardly onto the food portions is one of a powder and granules.

3. The apparatus of claim 1, wherein the motor is electrically-powered.

4. The apparatus of claim 3, further comprising a gear reducer disposed intermediate an output shaft of the motor and the drum (10).

5. The apparatus of claim 1, wherein the axis of rotation of the drum (10) is canted downwardly and within the range from 1 degree from horizontal to 30 degrees from horizontal.

6. The apparatus of claim 5, wherein the axis of rotation of the drum (10) is canted downwardly and within the range from 5 degrees to 15 degrees from horizontal.

7. The apparatus of claim 1, wherein the flavoring dispenser (52) is supported by an arm (54) extending through the inlet (12) of the rotatable drum (10).

8. The apparatus of claim 1, wherein the ratio of the diameter of the larger diameter portion (16) of the frustoconical interior (20), that is adjacent to the first end of the drum (10), is within the range from 1.1 to 1.6 times the size of the smaller diameter portion (17) of the frustoconical interior (20), that is adjacent to the second end of the drum (10).

9. The apparatus of claim 8, wherein an axial length of the interior of the drum (10) from the inlet (12) to the outlet (14) is greater than the large diameter portion (16) of the frustoconical portion (20) of the drum (10).

10. The apparatus of claim 1, wherein the rotatable drum (10) further comprises an interior portion (11) having a generally cylindrical interior disposed between the inlet (12) and the frustoconical portion (20).

11. The apparatus of claim 1, further comprising:
a differential impulse driver operatively coupled to reciprocate the rotatable drum (10) along an axis (22) of the frustoconical interior to thereby move food portions deposited through the inlet (12) and within the interior of the drum (10) in a direction from the inlet (12) to the outlet (14).

12. The apparatus of claim 11, wherein the differential impulse driver cyclically moves the rotatable drum (10) a distance, generally along its axis (22) and in a direction from the outlet (14) to the inlet (12), at a first rate of acceleration and then moves the rotatable drum (10) the distance, generally along its axis (22) and in a direction from the inlet (12) to the outlet (14), at a second rate of acceleration that is less than the first rate of acceleration;
wherein food portions deposited into the interior of the drum (10) slide along a wall of the interior of the drum (10) due to a lack of sufficient friction between the food portions and the wall to enable movement of the food portions with the wall at the first rate of acceleration; and
wherein food portions deposited into the interior of the drum (10) move with the wall of the interior of the drum (10) due to sufficient friction between the food portions and the wall to enable the movement of the food portions with the wall at the second rate of acceleration.

## Patentansprüche

1. Vorrichtung zum Aufbringen eines aromatisierenden Materials auf eine Vielzahl einzelner Nahrungsmittelportionen, umfassend:
eine drehbare Trommel (10), die Folgendes aufweist:
einen Einlass (12) an einem stromaufwärtigen Ende (5);
einen Auslass (14) an einem stromabwärtigen Ende (7), das dem stromaufwärtigen Ende gegenüberliegt;
eine Innenwand (18), die ein Inneres der Trommel (10) zwischen dem Einlass (12) und dem Auslass (14) definiert;
einen kegelstumpfförmigen Abschnitt (20) des Inneren der Trommel (10), der einen Abschnitt (16) mit größerem Durchmesser, der in der Nähe des Einlasses (12) liegt, und einen Abschnitt (17) mit kleinerem Durchmesser, der in der Nähe des Auslasses (14) liegt, aufweist;
einen radial äußeren Absatz (25) zwischen dem Abschnitt (16) mit größerem Durchmesser des kegelstumpfförmigen Abschnitts (20) des Inneren der Trommel und dem Einlass (12);
eine Vielzahl von winkelig beabstandeten und sich axial erstreckenden Mitnehmern (55) an der Innenwand (18) und innerhalb des kegelstumpfförmigen Abschnitts (20) des Inneren, um in dem kegelstumpfförmigen Abschnitt (20) der Trommel (10) aufgenommene Nahrungsmittelportionen zu bewegen und aufzuwirbeln;
eine Trommelstütze, die gekoppelt ist, um die drehbare Trommel (10) in entweder einer horizontalen Position, in der der kegelstumpfförmige Abschnitt (20) des Inneren um eine horizontale Achse (22) dadurch drehbar ist und einer nach unten geneigten Position, in der die Drehachse des kegelstumpfförmigen Abschnitts (20) des Inneren nach unten geneigt ist, um den Einlass (12) in einer erhöhten Position relativ zu dem Auslass (14) anzuordnen, zu stützen;
einen Motor, der betriebsfähig zwischen der Trommelstütze und der Trommel (10) gekoppelt ist, um die drehbare Trommel (10) um die Achse des kegelstumpfförmigen Abschnitts (20) des Inneren zu drehen; und
einen Aromatisierungsspender (52), der in dem Inneren der Trommel (10) gestützt ist, um ein aromatisierendes Material im Allgemeinen nach unten und auf Nahrungsmittelportionen abzugeben, die durch den Einlass (12) und in dem Inneren der Trommel (10) abgelegt sind.

2. Vorrichtung nach Anspruch 1, wobei das im Allgemeinen nach unten auf die Nahrungsmittelportionen abgegebene aromatisierende Material entweder ein Pulver oder ein Granulat ist.

3. Vorrichtung nach Anspruch 1, wobei der Motor elektrisch angetrieben ist.

4. Vorrichtung nach Anspruch 3, ferner ein Untersetzungsgetriebe umfassend, das zwischen einer Abtriebswelle des Motors und der Trommel (10) angeordnet ist.

5. Vorrichtung nach Anspruch 1, wobei die Drehachse der Trommel (10) nach unten und im Bereich von 1 Grad von der Horizontalen bis 30 Grad von der Horizontalen geneigt ist.

6. Vorrichtung nach Anspruch 5, wobei die Drehachse der Trommel (10) nach unten und im Bereich von 5 Grad bis 15 Grad von der Horizontalen geneigt ist.

7. Vorrichtung nach Anspruch 1, wobei der Aromatisierungsspender (52) durch einen Arm (54) gestützt ist, der sich durch den Einlass (12) der drehbaren Trommel (10) erstreckt.

8. Vorrichtung nach Anspruch 1, wobei das Verhältnis des Durchmessers des Abschnitts (16) mit größerem Durchmesser des kegelstumpfförmigen Inneren (20), der an das erste Ende der Trommel (10) angrenzt, im Bereich von 1,1- bis 1,6-mal die Größe des Abschnitts (17) mit kleinerem Durchmesser des kegelstumpfförmigen Inneren (20), der an das zweite Ende der Trommel (10) angrenzt, liegt.

9. Vorrichtung nach Anspruch 8, wobei eine axiale Länge des Inneren der Trommel (10) von dem Einlass (12) zu dem Auslass (14) größer ist als der Abschnitt (16) mit großem Durchmesser des kegelstumpfförmigen Abschnitts (20) der Trommel (10).

10. Vorrichtung nach Anspruch 1, wobei die drehbare Trommel (10) ferner einen Innenabschnitt (11), der ein im Allgemeinen zylindrisches Inneres aufweist, zwischen dem Einlass (12) und dem kegelstumpfförmigen Abschnitt (20) umfasst.

11. Vorrichtung nach Anspruch 1, ferner umfassend:
einen Differential-Impulsantrieb, der betriebsfähig gekoppelt ist, um die drehbare Trommel (10) entlang einer Achse (22) des kegelstumpfförmigen Inneren hin- und herzubewegen, um dadurch durch den Einlass (12) und innerhalb des Inneren der Trommel (10) abgelegte Nahrungsmittelportionen in eine Richtung von dem Einlass (12) zu dem Auslass (14) zu bewegen.

12. Vorrichtung nach Anspruch 11, wobei der Differential-Impulsantrieb die drehbare Trommel (10) zyklisch über eine Strecke, im Allgemeinen entlang ihrer Achse (22) und in einer Richtung von dem Auslass (14) zu dem Einlass (12), mit einer ersten Beschleunigungsrate bewegt und dann die drehbare Trommel (10) über die Strecke, im Allgemeinen entlang ihrer Achse (22) und in einer Richtung von dem Einlass (12) zu dem Auslass (14), mit einer zweiten Beschleunigungsrate, die geringer als die erste Beschleunigungsrate ist, bewegt;
wobei im Inneren der Trommel (10) abgelegte Nahrungsmittelportionen bei der ersten Beschleunigungsrate entlang einer Wand des Inneren der Trommel (10) gleiten, da zwischen den Nahrungsmittelportionen und der Wand keine ausreichende Reibung vorhanden ist, um eine Bewegung der Nahrungsmittelportionen mit der Wand zu ermöglichen; und
wobei sich im Inneren der Trommel (10) abgelegte Nahrungsmittelportionen bei der zweiten Beschleunigungsrate mit der Wand des Inneren der Trommel (10) bewegen, da eine ausreichende Reibung zwischen den Nahrungsmittelportionen und der Wand vorhanden ist, um die Bewegung der Nahrungsmittelportionen mit der Wand zu ermöglichen.

## Revendications

1. Appareil pour l'application d'un matériau d'assaisonnement sur une pluralité de portions alimentaires individuelles, comprenant :
un tambour rotatif (10) ayant :
une entrée (12) au niveau d'une extrémité amont (5) ;
une sortie (14) au niveau d'une extrémité aval (7) qui est opposée à l'extrémité amont ;
une paroi intérieure (18) définissant un intérieur du tambour (10) entre l'entrée (12) et la sortie (14) ;
une partie tronconique (20) de l'intérieur du tambour (10) comprenant une partie de plus grand diamètre (16) qui est proximale à l'entrée (12) et une partie de plus petit diamètre (17) qui est proximale à la sortie (14) ;
une chute radialement vers l'extérieur (25) entre la partie de plus grand diamètre (16) de la partie tronconique (20) de l'intérieur du tambour et l'entrée (12) ;
une pluralité de déflecteurs s'étendant axialement et espacés angulairement (55) sur la paroi intérieure (18) et à l'intérieur de la partie tronconique (20) de l'intérieur pour agiter et perturber les portions alimentaires reçues dans la partie tronconique (20) du tambour (10) ;
un support de tambour couplé pour supporter le tambour rotatif (10) dans l'une d'une position horizontale, dans laquelle la partie intérieure tronconique (20) peut tourner autour d'un axe horizontal (22) à travers celle-ci, et d'une position inclinée vers le bas, dans laquelle l'axe de rotation de la partie intérieure tronconique (20) est inclinée vers le bas pour disposer l'entrée (12) au niveau d'une position élevée par rapport à la sortie (14) ;
un moteur couplé fonctionnellement entre le support de tambour et le tambour (10) pour faire tourner le tambour rotatif (10) autour de l'axe de la partie intérieure tronconique (20) ; et
un distributeur d'assaisonnement (52) supporté à l'intérieur du tambour (10) pour distribuer un matériau d'assaisonnement globalement vers le bas et sur des portions alimentaires déposées à travers l'entrée (12) et à l'intérieur du tambour (10).

2. Appareil selon la revendication 1, dans lequel le matériau d'assaisonnement distribué globalement vers le bas sur les portions alimentaires est l'un d'une poudre et de granulés.

3. Appareil selon la revendication 1, dans lequel le moteur est alimenté électriquement.

4. Appareil selon la revendication 3, comprenant en outre un réducteur à engrenages disposé entre un arbre de sortie du moteur et le tambour (10).

5. Appareil selon la revendication 1, dans lequel l'axe de rotation du tambour (10) est incliné vers le bas et dans la plage allant de 1 degré par rapport à l'horizontale à 30 degrés par rapport à l'horizontale.

6. Appareil selon la revendication 5, dans lequel l'axe de rotation du tambour (10) est incliné vers le bas et dans la plage de 5 degrés à 15 degrés par rapport à l'horizontale.

7. Appareil selon la revendication 1, dans lequel le distributeur d'assaisonnement (52) est supporté par un bras (54) s'étendant à travers l'entrée (12) du tambour rotatif (10).

8. Appareil selon la revendication 1, dans lequel le rapport du diamètre de la partie de plus grand diamètre (16) de l'intérieur tronconique (20), qui est adjacente à la première extrémité du tambour (10), est compris dans la plage de 1,1 à 1,6 fois la taille de la partie de plus petit diamètre (17) de l'intérieur tronconique (20), qui est adjacente à la seconde extrémité du tambour (10).

9. Appareil selon la revendication 8, dans lequel une longueur axiale de l'intérieur du tambour (10) depuis l'entrée (12) jusqu'à la sortie (14) est supérieure à la partie de grand diamètre (16) de la partie tronconique (20) du tambour (10).

10. Appareil selon la revendication 1, dans lequel le tambour rotatif (10) comprend en outre une partie intérieure (11) ayant un intérieur globalement cylindrique disposé entre l'entrée (12) et la partie tronconique (20).

11. Appareil selon la revendication 1, comprenant en outre :
un entraîneur à impulsion différentielle couplé fonctionnellement pour transmettre un mouvement de va-et-vient au tambour rotatif (10) le long d'un axe (22) de l'intérieur tronconique pour déplacer ainsi les portions alimentaires déposées à travers l'entrée (12) et à l'intérieur du tambour (10) dans une direction allant de l'entrée (12) vers la sortie (14).

12. Appareil selon la revendication 11, dans lequel l'entraîneur à impulsion différentielle déplace cycliquement le tambour rotatif (10) sur une distance, globalement le long de son axe (22) et dans une direction allant de la sortie (14) à l'entrée (12), à un premier taux d'accélération et puis déplace le tambour rotatif (10) sur la distance, globalement le long de son axe (22) et dans une direction allant de l'entrée (12) à la sortie (14), à un second taux d'accélération qui est inférieur au premier taux d'accélération ;
dans lequel des portions alimentaires déposées à l'intérieur du tambour (10) glissent le long d'une paroi de l'intérieur du tambour (10) du fait d'un manque de frottement suffisant entre les portions alimentaires et la paroi pour permettre le déplacement des portions alimentaires avec la paroi au premier taux d'accélération ; et
dans lequel les portions alimentaires déposées à l'intérieur du tambour (10) se déplacent avec la paroi de l'intérieur du tambour (10) du fait d'un frottement suffisant entre les portions alimentaires et la paroi pour permettre le déplacement des portions alimentaires avec la paroi au second taux d'accélération.
